(19) **Europäisches Patentamt / European Patent Office / Office européen des brevets**

(11) **EP 3 363 774 A1**

(12) # DEMANDE DE BREVET EUROPEEN

(43) Date de publication:
**22.08.2018 Bulletin 2018/34**

(21) Numéro de dépôt: **18160395.2**

(22) Date de dépôt: **11.09.2009**

(51) Int Cl.:
*C03C 25/26* (2018.01)    *C03C 25/321* (2018.01)
*C09J 103/00* (2006.01)    *D06M 13/192* (2006.01)
*D06M 13/203* (2006.01)    *D06M 15/03* (2006.01)
*D06M 15/11* (2006.01)

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **11.09.2008 FR 0856109**

(62) Numéro(s) de document de la (des) demande(s) initiale(s) en application de l'article 76 CBE:
**09741402.3 / 2 324 089**

(71) Demandeur: **Saint-Gobain Isover**
**92400 Courbevoie (FR)**

(72) Inventeur: **JAFFRENNOU, Boris**
**75019 PARIS (FR)**

(74) Mandataire: **Saint-Gobain Recherche**
**Département Propriété Industrielle**
**39 Quai Lucien Lefranc**
**93300 Aubervilliers (FR)**

Remarques:
Cette demande a été déposée le 07-03-2018 comme demande divisionnaire de la demande mentionnée sous le code INID 62.

(54) **COMPOSITION D'ENCOLLAGE POUR LAINE MINERALE A BASE DE SUCRE HYDROGENE ET PRODUITS ISOLANTS OBTENUS**

(57) La présente invention se rapporte à une composition d'encollage pour des produits isolants à base de laine minérale, notamment de verre ou de roche, qui comprend

- au moins un sucre hydrogéné, et
- au moins un agent de réticulation polyfonctionnel.

Elle a également pour objet les produits isolants à base de fibres minérales ainsi obtenus.

EP 3 363 774 A1

**Description**

La présente invention se rapporte au domaine des produits d'isolation, thermiques et/ou acoustiques, à base de laine minérale, notamment de verre ou de roche, et d'un liant organique exempt de formaldéhyde.

L'invention concerne plus particulièrement une composition d'encollage apte à réticuler thermiquement pour former ledit liant organique, qui renferme au moins un sucre hydrogéné et au moins un agent de réticulation polyfonctionnel, et les produits isolants qui en résultent.

La fabrication de produits d'isolation à base de laine minérale comprend généralement une étape de fabrication de la laine elle-même, qui peut être mise en oeuvre par différents procédés, par exemple selon la technique connue du fibrage par centrifugation interne ou externe.

La centrifugation interne consiste à introduire la matière minérale en fusion (verre ou roche) dans un dispositif centrifuge comprenant une multitude de petits orifices, la matière étant projetée vers la paroi périphérique du dispositif sous l'action de la force centrifuge et s'en échappant sous la forme de filaments. A la sortie du dispositif centrifuge, les filaments sont étirés et entraînés vers un organe récepteur par un courant gazeux ayant une température et une vitesse élevées, pour former une nappe de fibres (ou laine minérale).

La centrifugation externe consiste, quant à elle, à déverser la matière en fusion à la surface périphérique externe d'organes rotatifs appelés rotors, d'où la fusion est éjectée sous l'action de la force centrifuge. Des moyens d'étirage par courant gazeux et de collecte sur un organe de réception sont également prévus.

Pour assurer l'assemblage des fibres entre elles et permettre à la nappe d'avoir de la cohésion, on projette sur les fibres, sur le trajet allant de la sortie du dispositif centrifuge vers l'organe récepteur, une composition d'encollage contenant une résine thermodurcissable. La nappe de fibres revêtues de l'encollage est soumise à un traitement thermique, à une température généralement supérieure à 100°C, afin d'effectuer la polycondensation de la résine et obtenir ainsi un produit d'isolation thermique et/ou acoustique ayant des propriétés spécifiques, notamment une stabilité dimensionnelle, une résistance à la traction, une reprise d'épaisseur après compression et une couleur homogène.

La composition d'encollage à projeter sur la laine minérale se présente généralement sous la forme d'une solution aqueuse renfermant la résine thermodurcissable et des additifs tels qu'un catalyseur de réticulation de la résine, un silane promoteur d'adhérence, une huile minérale anti-poussières, ... La composition d'encollage est le plus souvent appliquée sur les fibres par pulvérisation.

Les propriétés de la composition d'encollage dépendent en grande partie des caractéristiques de la résine. Du point de vue de l'application, il est nécessaire que la composition d'encollage présente une bonne aptitude à la pulvérisation et puisse se déposer à la surface des fibres afin de les lier efficacement.

La résine doit être stable pendant un laps de temps donné avant d'être utilisée pour former la composition d'encollage, laquelle composition est généralement préparée au moment de l'emploi en mélangeant la résine et les additifs mentionnés précédemment.

Sur le plan réglementaire, il est nécessaire que la résine soit considérée comme non polluante, c'est-à-dire qu'elle contienne - et qu'elle génère lors de l'étape d'encollage ou ultérieurement - le moins possible de composés pouvant nuire à la santé humaine ou à l'environnement.

Les résines thermodurcissables les plus couramment utilisées sont des résines phénoliques appartenant à la famille des résols. Outre leur bonne aptitude à réticuler dans les conditions thermiques précitées, ces résines sont solubles dans l'eau, possèdent une bonne affinité pour les fibres minérales, notamment en verre, et sont relativement peu coûteuses.

Ces résols sont obtenus par condensation de phénol et de formaldéhyde, en présence d'un catalyseur basique, dans un rapport molaire formaldéhyde/phénol supérieur à 1 de manière à favoriser la réaction entre le phénol et le formaldéhyde et à diminuer le taux de phénol résiduel dans la résine. La réaction de condensation entre le phénol et le formaldéhyde est opérée en limitant le degré de condensation des monomères, pour éviter la formation de chaînes longues, peu hydrosolubles, qui réduisent la diluabilité. En conséquence, la résine contient une certaine proportion de monomère n'ayant pas réagi, en particulier le formaldéhyde dont la présence n'est pas souhaitée à cause de ses effets nocifs avérés.

Pour cette raison, les résines à base de résol sont généralement traitées par de l'urée qui réagit avec le formaldéhyde libre en le piégeant sous forme de condensats urée-formaldéhyde non volatils. La présence d'urée dans la résine apporte en outre un avantage économique certain du fait de son faible coût, car on peut l'introduire en relativement grande quantité sans affecter les qualités d'emploi de la résine, notamment sans nuire aux propriétés mécaniques du produit final, ce qui abaisse notablement le coût total de la résine.

Il a néanmoins été observé que, dans les conditions de températures auxquelles la nappe est soumise pour obtenir la réticulation de la résine, les condensats urée-formaldéhyde ne sont pas stables ; ils se décomposent en redonnant du formaldéhyde et de l'urée (à son tour dégradée au moins partiellement en ammoniac) qui sont libérés dans l'atmosphère de l'usine.

La réglementation en matière de protection de l'environnement devenant plus contraignante oblige les fabricants de produits d'isolation à rechercher des solutions permettant d'abaisser encore les niveaux d'émissions indésirables, en particulier de formaldéhyde.

Des solutions de remplacement des résols dans les compositions d'encollage sont connues et se fondent sur l'emploi d'un polymère d'acide carboxylique, notamment d'acide acrylique.

Dans US 5 340 868, l'encollage comprend un polymère polycarboxylique, un β-hydroxylamide et un acide carboxylique monomérique au moins trifonctionnel.

Il a été proposé des compositions d'encollage comprenant un polymère polycarboxylique, un polyol et un catalyseur, lequel catalyseur est un catalyseur contenant du phosphore (US 5 318 990, US 5 661 213, US 6331 350, US 2003/0008978), un fluoroborate (US 5 977 232) ou bien un cyanamide, un dicyanamide ou une cyanoguanidine (US 5 932 689).

Il a aussi été décrit des compositions d'encollage comprenant une alcanolamine renfermant au moins deux groupements hydroxyle et un polymère polycarboxylique (US 6 071 994, US 6 099 773, US 6 146 746) associé à un copolymère (US 6 299 936).

Dans US 2002/0091185, le polymère polycarboxylique et le polyol sont utilisées en quantités telles que le rapport du nombre d'équivalents de groupes OH au nombre d'équivalents de groupes COOH varie de 0,6/1 à 0,8/1.

Dans US 2002/0188055, la composition d'encollage comprend un polymère polycarboxylique, un polyol et un tensioactif cationique, amphotère ou non ionique.

Dans US 2004/0002567, la composition d'encollage renferme un polymère polycarboxylique, un polyol et un agent de couplage de type silane.

Dans US 2005/0215153, il est décrit un encollage formé à partir d'un pré-liant contenant un polymère d'acide carboxylique et un polyol, et d'une dextrine en tant que co-liant.

Il est décrit dans WO 2006/120523 une composition d'encollage qui comprend (a) un poly(alcool vinylique), (b) un agent de réticulation multifonctionnel choisi parmi les polyacides non polymériques ou leurs sels, les anhydrides ou un polyaldéhyde non polymérique et (c) éventuellement un catalyseur, le rapport pondéral (a):(b) variant de 95:5 à 35:65 et le pH étant au moins égal à 1,25.

On connaît aussi de WO 2008/053332 une composition d'encollage qui comprend un adduit (a) d'un polymère de sucre et (b) d'un agent de réticulation multifonctionnel choisi parmi les polyacides monomériques ou leurs sels, et les anhydrides, qui est obtenu dans des conditions telles que le rapport pondéral (a):(b) varie de 95:5 à 35:65.

Parmi les inconvénients que présentent les compositions d'encollage qui viennent d'être citées, on peut citer le coût élevé, une viscosité importante, un pH bas qui crée des problèmes de corrosion acide et une température de réticulation élevée.

La présente invention a pour but de proposer une composition d'encollage pour des produits isolants à base de laine minérale qui est exempte de formaldéhyde, permettant ainsi de disposer d'une alternative aux compositions d'encollage à base de résols.

Un autre but est de fournir une composition d'encollage élaborée à partir de composés naturels issus de sources renouvelables, notamment végétales.

Un autre but est de fournir une composition d'encollage qui permet de fabriquer des produits isolants de couleur blanche.

Pour atteindre ces buts, la présente invention propose une composition d'encollage pour des produits isolants à base de laine minérale, notamment de verre ou de roche, qui comprend

- au moins un sucre hydrogéné, et
- au moins un agent de réticulation polyfonctionnel.

Par « sucre hydrogéné » on entend ici l'ensemble des produits résultant de la réduction, de quelque manière que ce soit, d'un sucre choisi parmi les monosaccharides, les oligosaccharides et les polysaccharides linéaires, cycliques ou ramifiés, et les mélanges de ces produits, notamment les hydrolysats d'amidon.

Les hydrolysats d'amidon selon l'invention sont obtenus de manière connue en soi, par exemple par hydrolyse enzymatique et/ou acide. Le degré d'hydrolyse de l'amidon est généralement caractérisé par l'équivalent en dextrose, aussi dénommé « Dextrose-Equivalent » (DE) en anglais, défini par la relation suivante :

$$DE = 100 \times \left( \frac{\text{nombre de liaisons glycosidiques rompues}}{\text{nombre de liaisons glycosidiques dans l'amidon initial}} \right)$$

Le DE des hydrolysats d'amidon varie selon le mode d'hydrolyse utilisé (type d'enzyme(s) par exemple) et le degré d'hydrolyse : la distribution en produits de différents degrés de polymérisation peut varier dans une large mesure.

Les hydrolysats d'amidon préférés ont un DE compris entre 5 et 99, et avantageusement entre 10 et 80.

L'hydrogénation du sucre peut être effectuée par les méthodes connues opérant dans des conditions de pression d'hydrogène et de température élevées, en présence d'un catalyseur choisi dans les groupes IB, IIB, IVB, VI, VII et VIII du tableau périodique des éléments, de préférence dans le groupe comprenant le nickel, le platine, le palladium, le cobalt, le molybdène et leurs mélanges. Le catalyseur préféré est le nickel de Raney. L'hydrogénation transforme le sucre ou le mélange de sucres (hydrolysat d'amidon) en polyols correspondants.

Bien que n'étant pas préférée, l'hydrogénation peut être mise en oeuvre en l'absence de catalyseur d'hydrogénation, en présence d'une source d'hydrogène autre que le gaz hydrogène, par exemple un borohydrure de métal alcalin tel que le borohydrure de sodium.

A titre d'exemples de sucres hydrogénés, on peut citer le glycérol, l'érythritol, l'arabitol, le xylitol, le sorbitol, le mannitol, l'iditol, le maltitol, l'isomaltitol, le lactitol, le cellobitol, le palatinitol, le maltotritol et les produits d'hydrogénation d'hydrolysats d'amidon, notamment commercialisés par la société Roquette sous la dénomination Polysorb®. De préférence, on utilise les produits d'hydrogénation d'hydrolysats d'amidon.

Le sucre hydrogéné conforme à l'invention possède une masse molaire moyenne en nombre inférieure à 100000, de préférence inférieure à 50000, avantageusement inférieure à 5000, et mieux encore supérieure à 180.

Le sucre hydrogéné conforme à l'invention peut contenir des sucres réducteurs en proportion faible qui n'excède pas 5 % en poids (de matières sèches), de préférence 1 % et mieux encore 0,5 %.

L'agent de réticulation polyfonctionnel est apte à réagir avec les groupes hydroxyles du sucre hydrogéné sous l'effet de la chaleur pour former des liaisons esters qui conduisent à l'obtention d'un réseau polymérique dans le liant final. Ledit réseau polymérique permet d'établir des liaisons au niveau des points de jonction des fibres dans la laine minérale.

L'agent de réticulation polyfonctionnel est choisi parmi les acides organiques polycarboxyliques ou les sels de ces acides, les anhydrides et les polyaldéhydes.

Par « acide organique polycarboxylique », on entend un acide organique comprenant au moins deux fonctions carboxyliques, de préférence au plus 300, avantageusement au plus 70, et mieux encore au plus 15 fonctions carboxyliques.

L'acide organique polycarboxylique peut être un acide non polymérique ou polymérique ; il présente une masse molaire en nombre en général inférieure ou égale à 50000, de préférence inférieure ou égale à 10000 et avantageusement inférieure ou égale à 5000.

L'acide organique polycarboxylique non polymérique est un acide alicyclique, ramifié ou non, saturé ou insaturé, un acide cyclique ou un acide aromatique.

L'acide organique polycarboxylique non polymérique peut être un acide dicarboxylique, par exemple l'acide oxalique, l'acide malonique, l'acide succinique, l'acide glutarique, l'acide adipique, l'acide pimélique, l'acide subérique, l'acide azelaïque, l'acide sébacique, l'acide malique, l'acide tartrique, l'acide tartronique, l'acide aspartique, l'acide glutamique, l'acide fumarique, l'acide itaconique, l'acide maléique, l'acide traumatique, l'acide camphorique, l'acide phtalique et ses dérivés, notamment contenant au moins un atome de bore ou de chlore, l'acide tétrahydrophtalique et ses dérivés, notamment contenant au moins un atome de chlore tel que l'acide chlorendique, l'acide isophtalique, l'acide téréphtalique, l'acide mésaconique et l'acide citraconique ; un acide tricarboxylique, par exemple l'acide citrique, l'acide tricarballylique, l'acide 1,2,4-butanetricarboxylique, l'acide aconitique, l'acide hémimellitique, l'acide triméllitique et l'acide trimésique ; un acide tétracarboxylique, par exemple l'acide 1,2,3,4-butanetétracarboxylique et l'acide pyroméllitique.

A titre d'exemple d'acide organique polycarboxylique polymérique, on peut citer les homopolymères d'acide carboxylique insaturé tel que l'acide (méth)acrylique, l'acide crotonique, l'acide isocrotonique, l'acide maléique, l'acide cinnamique, l'acide 2-méthylmaléique, l'acide fumarique, l'acide itaconique, l'acide 2-méthylitaconique, l'acide $\alpha,\beta$-méthyiènegiutarique et les monoesters d'acide dicarboxylique insaturés, tels que les maléates et les fumarates d'alkyle en $C_1$-$C_{10}$, et les copolymères d'au moins un acide carboxylique insaturé précité et d'au moins un monomère vinylique tel que le styrène substitué ou non par des groupements alkyle, hydroxyle ou sulfonyle, ou par un atome d'halogène, le (méth)acrylonitrile, le (méth)acrylamide ou non par des groupements alkyle en $C_1$-$C_{10}$, les alkyl (méth)acrylates, notamment le (méth)acrylate de méthyle, le (méth)acrylate d'éthyle, le (méth)acrylate de n-butyle et le (méth)acrylate d'isobutyle, le (méth)acrylate de glycidyle, le butadiène et un ester vinylique, notamment l'acétate de vinyle.

De préférence, la composition d'encollage comprend au moins un acide organique polycarboxylique non polymérique ayant une masse molaire en nombre inférieure ou égale à 1000, de préférence inférieure ou égale à 750 et avantageusement inférieure ou égale à 500, éventuellement en mélange avec au moins un acide organique polymérique.

L'agent de réticulation polyfonctionnel peut être un anhydride, notamment l'anhydride maléique, l'anhydride succinique ou l'anhydride phtalique. Toutefois, l'ajout d'un anhydride dans la composition d'encollage fait chuter fortement le pH ce qui entraîne des problèmes de corrosion des installations dans la ligne de fabrication et d'hydrolyse du sucre hydrogéné. L'introduction d'une base permet d'amener le pH de la composition d'encollage à une valeur suffisante pour éviter ces problèmes. Le coût lié à l'ajout supplémentaire de la base fait que l'usage d'anhydride n'est pas préféré.

L'agent de réticulation polyfonctionnel peut encore être un polyaldéhyde.

Par « polyaldéhyde », on entend un aldéhyde comprenant au moins deux fonctions aldéhyde.

De préférence, le polyaldéhyde est un dialdéhyde non polymérique, par exemple le glyoxal, le glutaraldéhyde, le 1,6-hexanedial ou le dialdéhyde 1,4-téréphtalique.

Les polyaldéhydes ont une très grande réactivité vis-à-vis des groupes hydroxyle du sucre hydrogéné mais aussi des groupes hydroxyle en général ce qui peut présenter des inconvénients, notamment une diminution de la stabilité et/ou une pré-gélification de la composition d'encollage avant le traitement de réticulation thermique. Pour prévenir ces inconvénients, les fonctions aldéhyde du polyaldéhyde sont avantageusement bloquées pour empêcher la réaction avec les constituants présents dans la composition d'encollage avant l'entrée de la laine minérale dans l'étuve. A titre d'exemple d'agent qui permet le blocage des fonctions aldéhyde, on peut citer l'urée et les urées cycliques.

Dans la composition d'encollage, le sucre hydrogéné représente 10 à 90 % du poids du mélange constitué par sucre hydrogéné et l'agent de réticulation polyfonctionnel, de préférence plus de 20 %, notamment 20 à 85 %, avantageusement au moins 30 %, et mieux encore de 30 à 80 %.

La composition d'encollage peut comprendre en outre un catalyseur, acide ou basique, qui a notamment pour fonction d'ajuster la température de début de réticulation.

Le catalyseur peut être choisi parmi les bases et les acides de Lewis, tels que les argiles, la silice colloïdale ou non, les amines organiques, les amines quaternaires, les oxydes métalliques, les sulfates métalliques, les chlorures métalliques, les sulfates d'urée, les chlorures d'urée et les catalyseurs à base de silicates.

Le catalyseur peut également être un composé contenant du phosphore, par exemple un sel d'hypophosphite de métal alcalin, un phosphite de métal alcalin, un polyphosphate de métal alcalin, un hydrogénophosphate de métal alcalin, un acide phosphorique ou un acide alkylphosphonique. De préférence, le métal alcalin est le sodium ou le potassium.

Le catalyseur peut encore être un composé contenant du fluor et du bore, par exemple l'acide tétrafluoroborique ou un sel de cet acide, notamment un tétrafluoroborate de métal alcalin tel que le sodium ou le potassium, un tétrafluoroborate de métal alcalino-terreux tel que le calcium ou le magnésium, un tétrafluoroborate de zinc et un tétrafluoroborate d'ammonium.

De préférence, le catalyseur est l'hypophosphite de sodium, le phosphite de sodium et les mélanges de ces composés.

La quantité de catalyseur introduite dans la composition d'encollage peut représenter jusqu'à 20 % du poids du sucre hydrogéné et de l'agent de réticulation polyfonctionnel, de préférence jusqu'à 10 %, et avantageusement est au moins égale à 1 %.

La composition d'encollage conforme à l'invention peut comprendre en outre les additifs conventionnels ci-après dans les proportions suivantes calculées sur la base de 100 parts en poids de sucre hydrogéné et d'agent de réticulation polyfonctionnel :

- 0 à 2 parts de silane, en particulier un aminosilane,
- 0 à 20 parts d'huile, de préférence 4 à 15 parts,
- 0 à 5 parts d'un agent hydrophobe, en particulier un silicone,
- 0 à 20 parts d'un polyol différent des sucres hydrogénés,
- 0 à 30 parts d'urée, de préférence 0 à 20 parts,
- 0 à 30 parts d'un « extendeur » choisi parmi les dérivés de la lignine tels que le lignosulfonate d'ammonium (LSA) ou le lignosulfonate de sodium, et les protéines animales ou végétales.

Le rôle des additifs est connu et brièvement rappelé : le silane est un agent de couplage entre les fibres et le liant, et joue également le rôle d'agent anti-vieillissement ; les huiles sont des agents anti-poussières et hydrophobes ; l'urée joue le rôle de plastifiant et permet en outre d'ajuster le temps de gel de la composition d'encollage afin d'éviter les problèmes de pré-gélification ; l'« extendeur » est une charge organique soluble ou dispersable dans la composition d'encollage qui permet notamment de diminuer le coût de celle-ci.

Le polyol ajouté en tant qu'additif est nécessairement différent du sucre hydrogéné ; notamment, on exclut les polyols se présentant sous la forme de polymères comprenant des motifs non saccharidiques tels que les polymères et les copolymères d'alcool vinylique.

La préparation de la composition d'encollage est effectuée par simple mélange des constituants précités.

La composition d'encollage obtenue présente un pH acide, de l'ordre de 1 à 4 qui est de préférence maintenu à une valeur au moins égale à 2, avantageusement au moins égale à 3 de manière à limiter les problèmes de corrosion de la ligne de fabrication des produites isolants à base de laine minérale. L'ajustement du pH peut être réalisé en ajoutant une base à la composition d'encollage, notamment une base azotée telle que la triéthanolamine ou l'hydroxyde d'ammonium, ou un hydroxyde de sodium ou de potassium.

Lorsque l'agent de réticulation polyfonctionnel est un polyacide non polymérique, il peut être avantageux de soumettre la composition d'encollage à un traitement thermique de manière à faire réagir une partie du sucre hydrogéné avec ledit polyacide. Grâce à ce traitement thermique, la teneur en polyacides libres de faible masse molaire dans la composition d'encollage est réduite, ce qui a pour effet de limiter les émissions gazeuses générées lors de la cuisson de l'encollage dans l'étuve. Le traitement thermique est effectué à une température pouvant aller de 40 à 130°C.

La composition d'encollage est destinée à être appliquée sur des fibres minérales, notamment des fibres de verre ou de roche.

De manière classique, la composition d'encollage est projetée sur les fibres minérales à la sortie du dispositif centrifuge et avant leur collecte sur l'organe récepteur sous la forme d'une nappe de fibres qui est ensuite traitée à une température permettant la réticulation de l'encollage et la formation d'un liant infusible. La réticulation de l'encollage selon l'invention se fait à une température comparable à celle d'une résine formophénolique classique, à une température supérieure ou égale à 110°C, de préférence supérieure ou égale à 130°, et avantageusement supérieure ou égale à 140°C.

Les produits isolants acoustiques et/ou thermiques obtenus à partir de ces fibres encollées constituent aussi un objet de la présente invention.

Ces produits se présentent généralement sous la forme d'un matelas ou d'un feutre de laine minérale, de verre ou de roche, ou encore d'un voile de fibres minérales, également de verre ou de roche, destiné notamment à former un revêtement de surface dudit matelas ou dudit feutre. Ces produits présentent une couleur blanche particulièrement avantageuse.

En outre, les produits isolants présentent une grande résistance au développement de microorganismes, notamment de moisissures, qui est due au caractère non-fermentescible du sucre hydrogéné.

Les exemples qui suivent permettent d'illustrer l'invention sans toutefois la limiter.

Dans ces exemples, on mesure :

➢ Sur la composition d'encollage

- la température de début de réticulation ($T_R$) et la vitesse de réticulation (V) par la méthode Dynamic Mechanical Analysis (DMA) qui permet de caractériser le comportement viscoélastique d'un matériau polymérique. On procède comme suit : un échantillon de papier Whatmann est imprégné de la composition d'encollage (teneur en matières solides organiques de l'ordre de 40 %) puis est fixé horizontalement entre deux mors. Un élément oscillant muni d'un dispositif de mesure de la contrainte en fonction de la déformation appliquée est disposé sur la face supérieure de l'échantillon. Le dispositif permet de calculer le module d'élasticité E'. L'échantillon est chauffé à une température variant de 20 à 250°C à la vitesse de 4°C/min. A partir des mesures, on établit la courbe de variation du module d'élasticité E' (en MPa) en fonction de la température (en °C) dont l'allure générale est donnée dans la Figure 1. On détermine sur la courbe les valeurs correspondant à la température de début de réticulation ($T_R$), en °C, et la pente correspondant à la vitesse de réticulation (V) en MPa/°C.

Figure 1

➢ Sur le produit d'isolation

- la résistance en traction est mesurée selon la norme ASTM C 686-71 T sur un échantillon découpé par estampage dans le produit isolant. L'échantillon a la forme d'un tore de 122 mm de longueur, 46 mm de largeur, un rayon de courbure de la découpe du bord extérieur égal à 38 mm et un rayon de courbure de la découpe du bord intérieur égal à 12,5 mm.

L'échantillon est disposé entre deux mandrins cylindriques d'une machine d'essais dont l'un est mobile et se déplace à vitesse constante. On mesure la force de rupture F (en gramme-force) de l'échantillon et on calcule la résistance en traction RT définie par le rapport de la force de rupture F à la masse de l'échantillon.

La résistance en traction est mesurée après la fabrication (résistance en traction initiale) et après un vieillissement accéléré dans un autoclave à une température de 105°C sous 100 % d'humidité relative pendant 15 minutes (RT15).

- l'épaisseur initiale du produit d'isolation et l'épaisseur après 24 heures et 12 jours sous compression avec un taux de compression (défini comme étant le rapport de l'épaisseur nominale à l'épaisseur sous compression) égal à 5/1. Les mesures d'épaisseur, exprimées en %, permettent d'évaluer la bonne tenue dimensionnelle du produit.
- l'absorption d'eau dans les conditions de la norme EN 1609, exprimée en kg d'eau absorbée par $m^2$ de produit isolant. Les produits d'isolation dont l'absorption d'eau est inférieure à 1 kg/$m^2$ sont considérés comme ayant une faible absorption d'eau à court terme (24 heures) et appartenant à la classe « WS » selon la certification ACERMI.
- le coefficient de conductivité thermique $\lambda$ selon la norme EN 13162, exprimée en W/(m x °K).

### EXEMPLES 1 A4

On prépare des compositions d'encollage comprenant les constituants figurant dans le tableau 1 exprimé en parts pondérales.

Le sucre hydrogéné est le produit d'hydrogénation d'un hydrolysat d'amidon (70 % de matières sèches) qui comprend 12 % en poids de maltitol et 12 % en poids de sorbitol.

Les compositions d'encollage sont préparées en introduisant successivement dans un récipient le sucre hydrogéné, l'acide citrique et l'hypophosphite de sodium (catalyseur) sous une agitation vigoureuse jusqu'à dissolution complète des constituants.

Les propriétés des compositions d'encollage figurant dans le tableau 1 suivant sont évaluées comparativement à une composition d'encollage classique renfermant une résine formophénolique et de l'urée (Référence) préparée conformément à l'exemple 2, essai 1 de WO 01/96254 A1.

Tableau 1

|  | Ex. 1 | Ex. 2 | Ex. 3 | Ex. 4 | Réf. |
|---|---|---|---|---|---|
| **Composition** | | | | | |
| Sucre hydrogéné (POLYSORB® 70/12/12 ; ROQUETTE) | 58 | 58 | 58 | 57 | - |
| Acide citrique | 42 | 42 | 42 | 31 | - |
| Homopolymère acrylique (ACUSOL® 445 ; ROHM & HAAS) | - | - | - | 12 | - |
| Hypophosphite de sodium | 5 | 5 | 5 | 5 | - |
| Glycérol | - | 10 | - | - | - |
| Silicone | - | - | 1 | - | - |
| **Propriétés** | | | | | |
| Température début de réticulation $T_R$(°C) | 155 | 153 | n. d. | 152 | 151 |
| Vitesse de réticulation V (MPa/°C) | 94 | 87 | n. d. | 85 | 161 |
| Viscosité à 25°C (mPa.s) [1] | 9,0 | 8,7 | n. d. | 11,0 | 8,0 |
| Viscosité à 50°C (mPa.s) [1] | 6,0 | 5,9 | n. d. | 6,7 | 6,0 |
| [1] solution à 40 % de matières solides<br>n. d. : non déterminé. | | | | | |

Les compositions d'encollage des exemples 1 à 4 ont des propriétés similaires à celles de la Référence en termes de température de début de réticulation ($T_R$) et de viscosité. La vitesse de réticulation (V) demeure plus faible que celle de la Référence.

Les compositions des exemples 1 à 4, ainsi que la résine formophénolique (Référence) sont utilisées pour former des produits d'isolation à base de laine de verre.

On fabrique de la laine de verre par la technique de la centrifugation interne dans laquelle la composition de verre fondu est transformée en fibres au moyen d'un outil dénommé assiette de centrifugation, comprenant un panier formant chambre de réception de la composition fondue et une bande périphérique percée d'une multitude d'orifices : l'assiette est mue en rotation autour de son axe de symétrie disposé verticalement, la composition est éjectée à travers les orifices sous l'effet de la force centrifuge et la matière s'échappant des orifices est étirée en fibres avec l'assistance d'un courant de gaz d'étirage.

De façon classique, une couronne de pulvérisation d'encollage est disposée au-dessous de l'assiette de fibrage de façon à répartir régulièrement la composition d'encollage sur la laine de verre venant d'être formée.

La laine minérale ainsi encollée est collectée sur un convoyeur à bande équipé de caissons d'aspiration internes qui retiennent la laine minérale sous forme d'un feutre ou d'une nappe à la surface du convoyeur. Le convoyeur circule ensuite dans une étuve maintenue à 290°C où les constituants de l'encollage polymérisent pour former un liant. Le produit isolant obtenu présente une densité égale à 17,5 kg/m$^3$, une épaisseur d'environ 82 mm immédiatement après la fabrication et une perte au feu de l'ordre de 5 %.

Les propriétés des produits d'isolation sont données dans le tableau 2 ci-après.

Tableau 2

| Composition d'encollage | Ex. 1 | Ex. 2 | Ex. 3 | Ex. 4 | Réf. |
|---|---|---|---|---|---|
| **Résistance en traction (gf/g)** | | | | | |
| Avant vieillissement | 327 | 319 | 258 | 333 | 419 |
| Après vieillissement | 295 | 269 | 188 | 218 | 351 |
| Perte (%) | 9,80 | 15,70 | 27,10 | 34,53 | 16,22 |
| **Epaisseur (mm)** | | | | | |
| 1 heure | 83,0 | 81,7 | 83,2 | 79,6 | 78,9 |
| 24 heures | 78,8 | 77,8 | 80,2 | 77,5 | 77,6 |
| 12 jours | 77,1 | 75,3 | 77,0 | 76,6 | 77,0 |
| **Absorption d'eau (kg/m$^2$)** | 8,6 | n. d. | 0,4 | n. d. | 2,6 |
| $\lambda$ **(W/(m x °K)** | 0, 0338 | 0,0339 | 0,0337 | 0,0338 | 0,0336 |
| n. d. : non déterminé | | | | | |

Les produits d'isolation fabriqués avec les compositions d'encollage des exemples 1 à 4 présentent des propriétés similaires au produit de référence en termes de reprise d'épaisseur après compression pendant 12 jours et de coefficient de conductivité thermique $\lambda$.

Les produits d'isolation traités avec la composition d'encollage des exemples 1 et 2 présentent une bonne résistance en traction après vieillissement (perte égale à 9,8 et 15,7 %, respectivement) comparativement à la Référence.

**Revendications**

1. Composition d'encollage pour des produits isolants à base de laine minérale, notamment de roche ou de verre, **caractérisée en ce qu'elle** comprend

   - au moins un sucre hydrogéné, et
   - au moins un agent de réticulation polyfonctionnel,
   - un catalyseur choisi parmi les acides et les bases de Lewis, les composés contenant du phosphore et les composés contenant du fluor et du bore, le catalyseur représentant au moins 1 % et jusqu'à 20 %, de préférence au moins 1 % et jusqu'à 10 % du poids, du sucre hydrogéné et de l'agent de réticulation polyfonctionnel.

2. Composition selon la revendication 1, **caractérisée en ce que** le sucre hydrogéné est le glycérol, l'érythritol, l'arabitol, le xylitol, le sorbitol, le mannitol, l'iditol, le maltitol, l'isomaltitol, le lactitol, le cellobitol, le palatinitol, le maltotritol et les produits d'hydrogénation d'hydrolysats d'amidon.

3. Composition selon la revendication 2, **caractérisée en ce que** le sucre hydrogéné est un produit d'hydrogénation d'hydrolysats d'amidon.

**4.** Composition selon l'une des revendications 1 à 3, **caractérisée en ce que** le sucre hydrogéné présente une masse molaire moyenne en nombre inférieure à 100000, de préférence inférieure à 50000, avantageusement inférieure à 5000, et mieux encore supérieure à 180.

**5.** Composition selon l'une des revendications 1 à 4, **caractérisée en ce que** le sucre hydrogéné contient des sucres réducteurs en une proportion n'excédant pas 5 % en poids (de matières sèches), de préférence 1 % et mieux encore 0,5 %.

**6.** Composition selon l'une des revendications 1 à 5, **caractérisée en ce que** l'agent de réticulation polyfonctionnel est choisi parmi les acides organiques polycarboxyliques ou les sels de ces acides, les anhydrides et les polyaldéhydes.

**7.** Composition selon la revendication 6, **caractérisée en ce que** l'acide organique polycarboxylique comprend au moins deux fonctions carboxyliques, de préférence au plus 300 fonctions carboxyliques, avantageusement au plus 70 et mieux encore au plus 15.

**8.** Composition selon la revendication 7, **caractérisée en ce que** l'acide organique polycarboxylique présente une masse molaire en nombre inférieure ou égale à 50000, de préférence inférieure ou égale à 10000 et avantageusement inférieure ou égale à 5000.

**9.** Composition selon la revendication 8, **caractérisée en ce que** l'acide organique polycarboxylique est choisi parmi les acides dicarboxyliques, notamment l'acide oxalique, l'acide malonique, l'acide succinique, l'acide glutarique, l'acide adipique, l'acide pimélique, l'acide subérique, l'acide azélaïque, l'acide sébacique, l'acide malique, l'acide tartrique, l'acide tartronique, l'acide aspartique, l'acide glutamique, l'acide fumarique, l'acide itaconique, l'acide maléique, l'acide traumatique, l'acide camphorique, l'acide phtalique et ses dérivés, en particulier contenant au moins un atome de bore ou de chlore, l'acide tétrahydrophtalique et ses dérivés, en particulier contenant au moins un atome de chlore, l'acide isophtalique, l'acide téréphtalique, l'acide mésaconique et l'acide citraconique, les acides tricarboxyliques, notamment l'acide citrique, l'acide tricarballylique, l'acide 1,2,4-butanetricarboxylique, l'acide aconitique, l'acide hémimellitique, l'acide triméllitique et l'acide trimésique, et les acides tétracarboxyliques, notamment l'acide 1,2,3,4-butanetétracarboxylique et l'acide pyroméllitique.

**10.** Composition selon l'une des revendications 6 à 8, **caractérisée en ce que** l'acide organique polycarboxylique est choisi parmi les acides organiques polycarboxyliques polymériques, en particulier les homopolymères d'acide carboxylique insaturé et les copolymères d'au moins un acide carboxylique insaturé et d'au moins un monomère vinylique.

**11.** Composition selon la revendication 10, **caractérisée en ce que** l'acide carboxylique insaturé est l'acide (méth)acrylique, l'acide crotonique, l'acide isocrotonique, l'acide maléique, l'acide cinnamique, l'acide 2-méthylmaléique, l'acide fumarique, l'acide itaconique, l'acide 2-méthylitaconique, l'acide $\alpha,\beta$-méthylèneglutarique et les monoesters d'acide dicarboxyliques insaturés, et le monomère vinylique est le styrène substitué ou non par des groupements alkyle, hydroxyle ou sulfonyle, ou par un atome d'halogène, le (méth)acrylonitrile, le (méth)acrylamide substitué ou non par des groupements alkyle en $C_1$-$C_{10}$, les alkyl (méth)acrylates, le (méth)acrylate de glycidyle, le butadiène et un ester vinylique.

**12.** Composition selon la revendication 6, **caractérisée en ce que** l'anhydride est l'anhydride maléique, l'anhydride succinique ou l'anhydride phtalique.

**13.** Composition selon la revendication 6, **caractérisée en ce que** le polyaldehyde est un dialdéhyde non polymérique, notamment le glyoxal, le glutaraldéhyde, le 1,6-hexanedial ou le dialdéhyde 1,4-téréphtalique.

**14.** Composition selon l'une des revendications 1 à 13, **caractérisée en ce que** le sucre hydrogéné représente 10 à 90 % du poids du mélange constitué par sucre hydrogéné et l'agent de réticulation polyfonctionnel, de préférence au moins 20 %, notamment 20 à 85 %, et avantageusement au moins 30 %, notamment 30 à 80 %.

**15.** Composition selon l'une des revendications 1 à 14, **caractérisée en ce qu'**elle comprend en outre les additifs ci-après dans les proportions suivantes calculées sur la base de 100 parts en poids de sucre hydrogéné et d'agent de réticulation polyfonctionnel :

- 0 à 2 parts de silane, en particulier un aminosilane,
- 0 à 20 parts d'huile, de préférence 4 à 15 parts,
- 0 à 5 parts d'un agent hydrophobe, en particulier un silicone,
- 0 à 20 parts d'un polyol différent des sucres hydrogénés,
- 0 à 30 parts d'urée, de préférence 0 à 20 parts,
- 0 à 30 parts d'un « extendeur » choisi parmi les dérivés de la lignine tels que le lignosulfonate d'ammonium (LSA) ou le lignosulfonate de sodium, et les protéines animales ou végétales.

Europäisches
Patentamt

European
Patent Office

Office européen
des brevets

**RAPPORT DE RECHERCHE EUROPEENNE**

Numéro de la demande

EP 18 16 0395

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,P | WO 2009/080938 A2 (SAINT GOBAIN ISOVER [FR]; JAFFRENNOU BORIS [FR]; SERUGHETTI DOMINIQUE) 2 juillet 2009 (2009-07-02) <br> * page 7, ligne 29 - page 8, ligne 7 * <br> * revendications 1, 15, 16 * <br> * page 18; exemples 27, 32, 34; tableau 4 * <br> * page 6, ligne 17 - page 7, ligne 16 * | 1,2,4-15 | INV. <br> C03C25/26 <br> C03C25/321 <br> C09J103/00 <br> D06M13/192 <br> D06M13/203 <br> D06M15/03 <br> D06M15/11 |
| X | EP 1 935 940 A (ROHM & HAAS [US]) 25 juin 2008 (2008-06-25) <br><br> * alinéa [0002]; revendications * <br> * alinéa [0054] * <br> * alinéa [0080] - alinéa [0081]; exemples 9, 10; tableau 5 * <br> * revendications 1, 7, 8 * | 1,2,4-8, 10,11, 14,15 | |
| X,D | EP 0 583 086 A (ROHM & HAAS [US]) 16 février 1994 (1994-02-16) <br> * page 2, ligne 1 - ligne 3 * <br> * page 6, ligne 1 - ligne 10 * <br> * page 4, ligne 33 - page 5, ligne 4 * <br> * page 6, ligne 18 - page 6, ligne 29 * <br> * revendications 1-4, 10 * | 1,2,4-15 | |
| X | EP 0 911 361 A1 (NAT STARCH CHEM INVEST [US]) 28 avril 1999 (1999-04-28) <br><br> * alinéa [0001] * <br> * alinéa [0006] - alinéa [0008] * <br> * alinéa [0014] * <br> * alinéa [0018] - alinéa [0019] * <br> * alinéa [0021] * <br> * revendications 1, 2, 5, 8 * | 1,2,4-8, 10,11, 14,15 | |

**DOMAINES TECHNIQUES RECHERCHES (IPC)**

C03C
D04H
D06M
C09J

-/--

Le présent rapport a été établi pour toutes les revendications

| Lieu de la recherche | Date d'achèvement de la recherche | Examinateur |
|---|---|---|
| Munich | 15 juin 2018 | Siemsen, Beatrice |

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

EP 18 16 0395

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 0 936 201 A2 (ROQUETTE FRERES [FR]) 18 août 1999 (1999-08-18) * alinéa [0002] * * alinéa [0024] * * alinéa [0044] * * revendications 1-5 * ----- | 1-9,14, 15 | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| Munich | 15 juin 2018 | Siemsen, Beatrice |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................
& : membre de la même famille, document correspondant

EPO FORM 1503 03.82 (P04C02)

**EP 3 363 774 A1**

**ANNEXE AU RAPPORT DE RECHERCHE EUROPEENNE
RELATIF A LA DEMANDE DE BREVET EUROPEEN NO.**

EP 18 16 0395

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-06-2018

| Document brevet cité au rapport de recherche | Date de publication | Membre(s) de la famille de brevet(s) | | Date de publication |
|---|---|---|---|---|
| WO 2009080938 A2 | 02-07-2009 | AU | 2008339837 A1 | 02-07-2009 |
| | | BR | PI0820963 A2 | 14-07-2015 |
| | | CA | 2708079 A1 | 02-07-2009 |
| | | CN | 101939268 A | 05-01-2011 |
| | | CO | 6311013 A2 | 22-08-2011 |
| | | EA | 201070679 A1 | 30-12-2010 |
| | | EP | 2231543 A2 | 29-09-2010 |
| | | FR | 2924719 A1 | 12-06-2009 |
| | | JP | 5575658 B2 | 20-08-2014 |
| | | JP | 2011506781 A | 03-03-2011 |
| | | KR | 20100094546 A | 26-08-2010 |
| | | NZ | 586577 A | 28-09-2012 |
| | | UA | 103014 C2 | 10-09-2013 |
| | | US | 2010282996 A1 | 11-11-2010 |
| | | US | 2012090505 A1 | 19-04-2012 |
| | | WO | 2009080938 A2 | 02-07-2009 |
| EP 1935940 A | 25-06-2008 | AU | 2007246193 A1 | 10-07-2008 |
| | | CN | 101225210 A | 23-07-2008 |
| | | EP | 1935940 A1 | 25-06-2008 |
| | | JP | 4918472 B2 | 18-04-2012 |
| | | JP | 2008156634 A | 10-07-2008 |
| | | KR | 20080058213 A | 25-06-2008 |
| | | TW | 200837133 A | 16-09-2008 |
| | | US | 2008153946 A1 | 26-06-2008 |
| EP 0583086 A | 16-02-1994 | AT | 160597 T | 15-12-1997 |
| | | AU | 667921 B2 | 18-04-1996 |
| | | BR | 9303315 A | 22-03-1994 |
| | | CA | 2101450 A1 | 07-02-1994 |
| | | CN | 1083844 A | 16-03-1994 |
| | | CZ | 9301592 A3 | 16-03-1994 |
| | | DE | 69315393 D1 | 08-01-1998 |
| | | DE | 69315393 T2 | 30-04-1998 |
| | | DK | 0583086 T3 | 02-02-1998 |
| | | EP | 0583086 A1 | 16-02-1994 |
| | | ES | 2109441 T3 | 16-01-1998 |
| | | FI | 933473 A | 07-02-1994 |
| | | GR | 3026182 T3 | 29-05-1998 |
| | | HK | 1001096 A1 | 22-05-1998 |
| | | IL | 106446 A | 30-09-1997 |
| | | JP | 3215233 B2 | 02-10-2001 |
| | | JP | H06184285 A | 05-07-1994 |
| | | NZ | 248215 A | 26-09-1995 |
| | | SK | 82993 A3 | 06-04-1994 |
| | | TW | 265349 B | 11-12-1995 |

Pour tout renseignement concernant cette annexe : voir Journal Officiel de l'Office européen des brevets, No.12/82

page 1 de 2

**ANNEXE AU RAPPORT DE RECHERCHE EUROPEENNE
RELATIF A LA DEMANDE DE BREVET EUROPEEN NO.**

EP 18 16 0395

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-06-2018

| Document brevet cité au rapport de recherche | | Date de publication | Membre(s) de la famille de brevet(s) | | Date de publication |
|---|---|---|---|---|---|
| | | | US | 5661213 A | 26-08-1997 |
| | | | US | 5763524 A | 09-06-1998 |
| | | | US | 6136916 A | 24-10-2000 |
| | | | US | 6221973 B1 | 24-04-2001 |
| | | | ZA | 9305397 B | 07-02-1994 |
| EP 0911361 | A1 | 28-04-1999 | AU | 751018 B2 | 08-08-2002 |
| | | | CA | 2251171 A1 | 27-04-1999 |
| | | | DE | 69822957 D1 | 13-05-2004 |
| | | | DE | 69822957 T2 | 12-08-2004 |
| | | | EP | 0911361 A1 | 28-04-1999 |
| | | | JP | 4536834 B2 | 01-09-2010 |
| | | | JP | H11199786 A | 27-07-1999 |
| | | | KR | 100561110 B1 | 01-12-2006 |
| | | | MX | 208461 B | 19-06-2002 |
| | | | NZ | 331820 A | 28-02-2000 |
| | | | US | 5895804 A | 20-04-1999 |
| EP 0936201 | A2 | 18-08-1999 | AT | 247608 T | 15-09-2003 |
| | | | CA | 2262055 A1 | 11-08-1999 |
| | | | DE | 69910463 D1 | 25-09-2003 |
| | | | EP | 0936201 A2 | 18-08-1999 |
| | | | FR | 2774682 A1 | 13-08-1999 |
| | | | JP | H11292593 A | 26-10-1999 |
| | | | US | 2003010254 A1 | 16-01-2003 |

Pour tout renseignement concernant cette annexe : voir Journal Officiel de l'Office européen des brevets, No.12/82

page 2 de 2

EPO FORM P0460

**EP 3 363 774 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5340868 A
- US 5318990 A
- US 5661213 A
- US 6331350 B
- US 20030008978 A
- US 5977232 A
- US 5932689 A
- US 6071994 A
- US 6099773 A
- US 6146746 A
- US 6299936 B
- US 20020091185 A
- US 20020188055 A
- US 20040002567 A
- US 20050215153 A
- WO 2006120523 A
- WO 2008053332 A
- WO 0196254 A1